# EUROPEAN PATENT APPLICATION

(11) **EP 3 086 264 A1**
(43) Date of publication of application: **26.10.2016**
(21) Application number: 15197136.3
(22) Date of filing: 30.11.2015
(51) Int. Cl.: G06Q 10/00

(54) **METHOD AND APPARATUS FOR PROVIDING SERVICE USING BEACON SIGNAL**

(30) Priority: 23.04.2015 KR 20150057133
(71) Applicant: SK Planet Co., Ltd., Seongnam-si, Gyeonggi-do 463-400 (KR)
(72) Inventor: WOO, Jongwon, 21324 Incheon (KR)
(74) Representative: Thorniley, Peter

(57) **Abstract**

Provided are a method and apparatus for providing a service using a beacon signal. More particularly, the method for providing the service using the beacon signal may include analyzing the strength of a beacon signal, determining shop entrance or exit information of a user, managing shop information such as the number of customers in a shop, the number of available seats, or the like, or providing an additional service suitable for a user who is entering or exiting the shop. A terminal includes a beacon signal collection module configured to receive a beacon signal from at least one beacon device, a beacon signal analysis module configured to analyze a change in strength of beacon signals collected through the beacon signal collection module for a predetermined time, and a service processing module configured to determine whether a user of a terminal enters or exits a shop where the beacon device is located, according to the change in strength of the beacon signals, receive corresponding information from a service providing server according to a result of the determination, and process the received corresponding information.

## Description

### CROSS-REFERENCE TO RELATED APPLICATION

This application claims priority to and the benefit of Korean Patent Application No. 10-2015-0057133 filed in the Korean Intellectual Property Office on April 23, 2015, the entire contents of which are incorporated herein by reference.

### BACKGROUND

### 1. Field of the Invention

The present invention relates to a method and apparatus for providing a service using a beacon signal, and more particularly, to a method and apparatus for providing a service using a beacon signal by analyzing the strength of a beacon signal, determining shop entrance or exit information of a user, managing shop information such as the number of customers in a shop, the number of available seats, or the like, or providing an additional service suitable for a user who is entering or exiting the shop.

### 2. Discussion of Related Art

This section is intended to merely provide background for embodiments of the present invention and is not considered prior art in the claims.

With the development of mobile communication networks and the advance in terminal specifications, mobile communication terminals have become the necessity for modem people and have evolved into total entertainment equipment beyond typical simple communication devices or information providing devices.

Further, technologies for performing short-range wireless communication between devices that are located within a short distance from each other are being rapidly developed, one of which is Bluetooth communication.

Such Bluetooth communication continues to evolve, and recently, Bluetooth low energy technology (Bluetooth 4.0) is widely used for smartphones, retail geo-fencing, and mobile payments. Such Bluetooth low energy (BLE) technology has lower power consumption than a standard Bluetooth wireless connection and is in the spotlight. However, it is difficult to provide various application services using Bluetooth low energy technology.

A current shop management system may allow shop management, such as the number of available seats in the shop, by coupling a point of sales (POS) system and an external system, transmitting a current order status for each table of a POS system, and receiving a response from the external system. Conventionally, the interoperation between a POS system of a shop and an external system is necessarily required. Accordingly, when the POS system is changed, an interoperating procedure between external systems should also be changed, and it is difficult to perform shop management in real time.

A solution is needed to be developed to perform shop management using Bluetooth low energy (BLE) technology more easily and also provide an additional service suitable for a user who is entering or exiting the shop.

### SUMMARY

The present invention has been proposed to solve the aforementioned problem and is directed to providing a service providing method and apparatus using a beacon signal in order to more easily manage a shop using Bluetooth low energy (BLE) technology.

More particularly, the present invention is directed to providing a service providing method and apparatus using a beacon signal in order to more easily manage a variety of information such as the number of available seats, the number of customers, and the gender of customers, etc. while analyzing the change in strength of beacon signals transmitted from a beacon device using Bluetooth low energy (BLE) technology, determining the entrance or exit of a user according to the analysis, and providing appropriate information to the user according to the determined state of the user.

The purpose of the present invention is not limited to the aforesaid, but other purposes not described herein will be clearly understood by those skilled in the art from descriptions below.

One aspect of the present invention provides a terminal including: a beacon signal collection module configured to receive a beacon signal from at least one beacon device; a beacon signal analysis module configured to analyze a change in strength of beacon signals collected through the beacon signal collection module for a predetermined time; and a service processing module configured to determine whether a user of a terminal enters or exits a shop where the beacon device is located, according to the change in strength of the beacon signals, receive corresponding information from a service providing server according to a result of the determination, and process the received corresponding information.

The terminal may further include a moving speed measurement module configured to measure a moving speed, in which the service processing module considers the moving speed measured through the moving speed measurement module when determining whether the user of the terminal enters or exits the shop.

The terminal may further include a server interoperating module configured to transfer a result determined by the service processing module to the service providing server and receive corresponding information from the service providing server.

Another aspect of the present invention provides a service providing server including: a terminal interface module configured to receive shop entrance or exit information from any one terminal; a shop information management module configured to reflect the entrance or exit information in prestored shop information regarding a shop where a user of the terminal is located to update the shop information; and a customer information management module configured to extract service information corresponding to the entrance or exit information and transmit the extracted service information to the terminal through the terminal interface module.

The shop information may include one or more of a shop name, a shop location, a shop size, the total number of seats in the shop, the number of available seats in the shop, shop items, and shop event information, which are prestored corresponding to beacon identification information.

The customer information management module may consider user information of the terminal upon extracting the service information corresponding to the entrance or exit information.

Still another aspect of the present invention provides a method of providing a service using a beacon signal in a service providing apparatus using a beacon signal, the method including: receiving a beacon signal from at least one beacon device; analyzing a change in strength of beacon signals received for a predetermined period; determining whether a user of a terminal enters or exits a shop where the beacon device is located, according to the change in strength of the beacon signals, and processing corresponding information according to a result of the determination.

The determining may include considering a moving speed of the terminal upon determining whether the user of the terminal enters or exits the shop.

The processing of the corresponding information may include reflecting the entrance or exit information in prestored shop information corresponding to the shop where the user of the terminal is currently located to update the shop information, or providing guide information corresponding to the entrance or exit information in consideration of user information of the terminal.

Yet another aspect of the present invention may provide a computer-readable recording medium storing a program for executing the above-described service providing method using the beacon signal.

According to the service providing method and apparatus using the beacon signal according to an embodiment of the present invention, it is possible to analyze the change in strength of beacon signals transmitted from a beacon device using Bluetooth low energy (BLE) technology, determine the entrance or exit of a user according to the analysis, and then more easily provide the user with information suitable for the determined state of the user, for example, various additional services, such as providing shop event related information to a user who is entering the shop or providing a discount coupon that can be used on the next visit to a user who is exiting the shop.

According to an embodiment of the present invention, it is also possible to allow a shop manager to easily acquire information, such as the number of available seats in the shop, the number of customers, etc., to more easily manage the shop and check more in-depth customer information, such as the gender of customers, the number of visits, etc., by determining whether the user enters or exits the shop using the beacon signal transmitted from the beacon device.

Various effects other than those described above may be disclosed directly or implicitly in the detailed description according to the following exemplary embodiment of the present invention.

### BRIEF DESCRIPTION OF DRAWINGS

FIG. 1 is a block diagram schematically showing a service providing system using a beacon signal according to an embodiment of the present invention.
FIG. 2 is a block diagram showing a main configuration of a terminal according to an embodiment of the present invention.
FIG. 3 is a block diagram showing a main configuration of a service providing server according to an embodiment of the present invention.
FIG. 4 is a flowchart illustrating a service providing method using a beacon signal in a terminal according to an embodiment of the present invention.
FIG. 5 is a flowchart illustrating a service providing method using a beacon signal in a service providing server according to an embodiment of the present invention.
FIG. 6 is a sequence diagram illustrating a service providing method using a beacon signal according to an embodiment of the present invention.
FIG. 7 is a sequence diagram illustrating a service providing method using a beacon signal according to another embodiment of the present invention.
FIG. 8 is a flowchart illustrating in detail a service providing method using a beacon signal according to an embodiment of the present invention.
FIG. 9 is an exemplary diagram illustrating a service providing method using a beacon signal according to an embodiment of the present invention.
FIG. 10 is a block diagram showing an operating environment of an apparatus for providing a service using a beacon signal according to an embodiment of the present invention.

### DETAILED DESCRIPTION

Hereinafter, exemplary embodiments of the present invention will be described in detail with reference to the accompanying drawings. The features and advantages of aspects of the present invention will become more apparent from the detailed description set forth below.

However, detailed descriptions related to well-known functions or configurations will be ruled out in order not to unnecessarily obscure the subject matter of the present invention. In addition, it should be noted that like reference numerals denote like elements throughout the specification and drawings.

The terms or words used in the following description and drawings should not be construed as being limited to typical or dictionary meanings, but should be construed as the meaning and concept corresponding to the technical idea of the present invention on the basis of the principle that an inventor can appropriately define the concept of the term for describing his or her invention in the best manner. Accordingly, the configurations illustrated in embodiments and drawings described in the specification do not represent the technical idea of the present invention but are just exemplary embodiments. Thus, it should be understood that various equivalents and modifications may exist which can be replaced at the time of filing an application.

While the terms including an ordinal number, such as "first," "second," etc. may be used herein to describe various elements, such elements are not limited to those terms. The terms are only to distinguish one component from another. For example, a first component may be named a second component without departing from the scope of the present invention and the second component may also be similarly named the first component.

It is to be understood that when one element is referred to as being "connected to" or "coupled to" another element, it may be connected or coupled logically or physically. In other words, it is to be understood that one element may be directly connected or coupled to another element or indirectly connected or coupled to another element with a third element intervening therebetween.

The terms used in the present specification are set forth to explain the embodiments of the present invention, and the scope of the present invention is not limited thereto. The singular forms 'a,' 'an,' and 'the' include plural reference unless the context clearly dictates otherwise. It will be further understood that the terms "include," "comprise," or "have" used in this specification, specify the presence of stated features, steps, operations, components, parts, or combinations thereof, but do not preclude the presence or addition of one or more other features, numerals, steps, operations, components, parts, or combinations thereof.

Further, embodiments within the scope of the present invention also include computer-readable media for carrying or storing computer-executable instructions and/or data structures. Such computer-readable media can be any available media that can be accessed by a general purpose or special purpose computer system. Thus, by way of example, and not limitation, the computer-readable media can include physical computer-readable storage media including RAM, ROM, EEPROM, CD-ROM or other optical disk storage, magnetic disk storage or other magnetic storage devices, or any other medium which can be used to store or deliver desired program code means in the form of computer-executable instructions, computer-readable instructions, or data structures and which can be accessed by a general purpose or special purpose computer.

In the following description and claims, the term "network" is defmed as one or more data links that allow electronic data to be transmitted between computer systems and/or modules. When information is transferred or provided over a network or another communications connection (either hardwired, wireless, or a combination of hardwired or wireless) to a computer system, the computer system properly views the connection as a computer-readable medium. The computer-readable instructions include, for example, instructions and data which cause a general purpose computer system or special purpose computer system to perform a certain function or group of functions. The computer-executable instructions may be, for example, binaries, intermediate format instructions such as assembly language, or even source code.

Furthermore, those skilled in the art will appreciate that the invention may be practiced in network computing environments with many types of computer system configurations, including, personal computers, laptop computers, hand-held devices, multi-processor systems, microprocessor-based or programmable consumer electronics, network PCs, minicomputers, mainframe computers, mobile telephones, PDAs, pagers, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

A method and apparatus for providing a service using a beacon signal according to an embodiment of the present invention will be described in detail with reference to the drawings.

First, a service providing system using a beacon signal according to an embodiment of the present invention will be described.

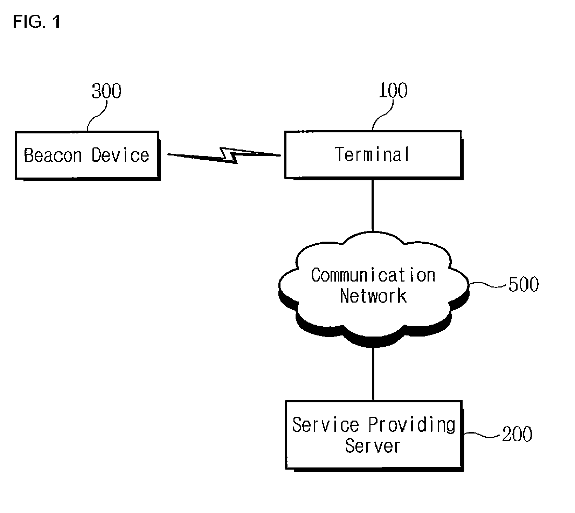

FIG. 1 is a block diagram schematically showing the service providing system using the beacon signal according to an embodiment of the present invention.

Referring to FIG. 1, the service providing system using the beacon signal according to an embodiment of the present invention may include a terminal 100, a service providing server 200, and at least one beacon device 300 that transmits a beacon signal to the terminal 100. In addition, the service providing system may include a communication network 500 that supports transmission and reception of information between the terminal 100 and the service providing server 200.

Each element will be schematically described below. First, the terminal 100 according to an embodiment of the present invention denotes a user device that may transmit and receive various types of data via the communication network 500 according to manipulation of a user. The terminal 100 may perform voice or data communication over the communication network 500 and may transmit and receive a variety of information to and from the service providing server 200. The terminal 100 according to an embodiment of the present invention may include a memory that stores browsers, programs, and protocols for transmitting/receiving information, a microprocessor that executes various types of programs to perform calculation and control, etc.

The terminal 100 according to an embodiment of the present invention may be a terminal capable of Bluetooth communication (e.g., Bluetooth 4.0, that is, Bluetooth low energy (hereinafter, referred to as BLE)) and may receive a beacon signal transmitted from the beacon device 300 through BLE communication and thus perform predetermined processing. In other words, the terminal 100 according to an embodiment of the present invention may sense a beacon signal transmitted from the beacon device 300 to recognize the beacon device 300, which is positioned in a shop, analyze the change in strength of the beacon signals transmitted from the beacon device 300 for a predetermined time, and determine whether a user of the terminal 100 enters or exits the shop where the beacon device 300 is located. In this case, the terminal 100 according to an embodiment of the present invention may sense and consider movement of the user when the terminal 100 determines the entrance to or exit from the shop.

Here, the beacon device 300 may be installed indoors, e.g., in the shop, and configured to transmit the beacon signal over a certain range from 5 cm to 49 m. The terminal 100 may sense the beacon signal by continuously scanning the certain range for the presence of a transmitted beacon signal. Here, the terminal 100 may extract beacon identification information from the transmitted beacon signal. The terminal 100 may extract a distance to the beacon device 300 according to the strength of the beacon signal or deliver information about the strength of the beacon signal to the service providing server 200. Thus, the service providing server 200 may check the distance.

In addition, the terminal 100 according to an embodiment of the present invention may transmit entrance or exit information to the service providing server 200 over the communication network 500 and thus may receive corresponding information from the service providing server 200 and process the corresponding information. For example, when predetermined information is received from the service providing server 200 according to the determination result, the terminal 100 may perform a designated operation of outputting the information through a designated application such as a mobile wallet application or executing a predetermined application. In this case, when the user is entering the shop, the terminal 100 may receive various coupons, current event information, shop-associated additional information (e.g., a Wi-Fi password), etc., which may be used in the shop, from the service providing server 200 and may output the received information, etc. On the other hand, when the user exits the shop, the terminal 100 may receive a shop stay time, a shop use status, various coupons that may be used on the next visit, event information, etc. from the service providing server 200.

An operating method of the terminal 100 will be described in more detail, and the terminal 100 according to an embodiment of the present invention may be implemented in various forms. For example, the terminal 100 described in the specification may be a stationary terminal such as a smart TV, a desktop computer, and the like as well as a mobile terminal such as a smart phone, a tablet PC, a personal digital assistant (PDA), a portable multimedia player (PMP), and an MP3 player.

In accordance with the convergence trend of digital devices, there are various modifications of a mobile device, which are too many to enumerate. A unit equivalent to the above-described units may be used as the terminal 100 according to an embodiment of the present invention. As long as any device may transmit and receive information to and from the service providing server 200 over the communication network 500 and may transmit and receive information to and from the beacon device 300 in a short-range wireless communication manner, the device may be used as the terminal 100 according to an embodiment of the present invention.

When the shop entrance or exit information is received from the terminal 100, the service providing server 200 according to an embodiment of the present invention may provide corresponding information to the terminal 100. For example, when the user of the terminal 100 is determined to have entered the shop, the service providing server 200 may provide information regarding various events and discounts that are in progress in the shop. When the user of the terminal 100 is determined to have exited the shop, the service providing server 200 may provide information regarding coupons that may be used on the next visit. When the user of the terminal 100 is determined to have stayed in a shop entrance for a certain time, the service providing server 200 may provide event information for inducing the user to enter the shop.

In addition, the service providing server 200 according to an embodiment of the present invention may transmit and receive various types of information to and from the terminal 100 over the communication network 500 and may provide a mobile wallet application to the terminal 100. The service providing server 200 may provide a variety of additional information, such as shop information and customer information, to a terminal of a shop manager who manages the beacon device 300.

The beacon device 300 according to an embodiment of the present invention is located in the shop and serves to transmit the beacon signal to at least one terminal 100. In this case, the beacon device 300 may broadcast the beacon signal including beacon identification information (Uniq ID) to the terminal 100.

The main configurations and operating methods of the terminal 100 and the service providing server 200 will be described below in more detail. A processor installed in each device according to an embodiment of the present invention may process program commands for executing the method according to an embodiment of the present invention. In one implementation, the processor may be a single-threaded processor. In alternative implementations, the processor may be a multithreaded processor. Furthermore, the processor may also process a command stored in a memory or a storage device.

In addition, the beacon device 300 and the terminal 100 according to an embodiment of the present invention have been described as transmitting and receiving information in a BLE communication scheme, but are not limited thereto. If any communication scheme allows a certain signal including its own identification information to be transmitted, the communication scheme may be applied to an embodiment of the present invention.

Furthermore, the terminal 100 and the service providing server 200 interoperate over the communication network 500. The communication network 500 denotes a network, such as the Internet, an intranet, a mobile communication network, a satellite communication network, etc., which is capable of transmitting and receiving data using an Internet protocol in various wired/wireless communication technologies. In addition, the communication network 500 is coupled with the service providing server 200 and configured to store computing resources such as hardware or software. The communication network 500 includes networks such as Code Division Multiple Access (CDMA), Wideband Code Division Multiple Access (WCDMA), Global System for Mobile Communications (GSM), Long Term Evolution (LTE), Evolved Packet Core (EPC), and others, next generation networks and computing networks, in addition to a closed network (for example, a local area network (LAN), a wide area network (WAN), etc.) and an open network (for example, the Internet).

Moreover, the communication network 500 according to an embodiment of the present invention may include, for example, a plurality of access networks (not shown) and core networks (not shown) and may further include an external network, for example, the Internet network (not shown). Here, each of the access networks (not shown) performs wired/wireless communication with the terminal 100 and may be implemented with a plurality of base stations (BSs) such as a base transceiver station (BTS), a NodeB, and an eNodeB and a base station controller (BSC) such as a radio network controller (RNC). In addition, as described above, a digital signal processing unit and a wireless signal processing unit that were integrally implemented in the base station are separated into a digital unit (hereinafter referred to as a DU) and a radio unit (hereinafter referred to as an RU), respectively. A plurality of RUs (not shown) may be installed in a plurality of regions and may be connected with a centralized DU (not shown).

In addition, the core network (not shown) constituting a mobile network along with the access network (not shown) serves to connect the access network (not shown) with an external network, for example, the Internet network (not shown).

As described above, the core network (not shown) is a network system that performs a main function for a mobile communication service such as mobility control and switching between the access networks (not shown) and is configured to perform circuit switching or packet switching and manage and control packet flow in the mobile network. In addition, the core network (not shown) may serve to manage mobility between frequencies and interoperate between traffic in the access network (not shown) and the core network (not shown) and another network, for example, the Internet network (not shown). The core network (not shown) may further include a serving gateway (SGW), a PDN gateway (PGW), a mobile switching center (MSC), a home location register (HLR), a mobile mobility entity (MME), and a home subscriber server (HSS).

In addition, the Internet network (not show) may denote a typical open communication network through which information is exchanged according to a TCP/IP protocol, that is, a public network and may be connected with the service providing server 200 and configured to provide information provided from the service providing server 200 to the terminal 100 via the core network (not shown) and the access network (not shown) and provide information provided from the terminal 100 to the service providing server 200 via the core network (not shown) and the access network (not shown).

A main configuration and an operating method of the terminal 100 according to an embodiment of the present invention will be described below.

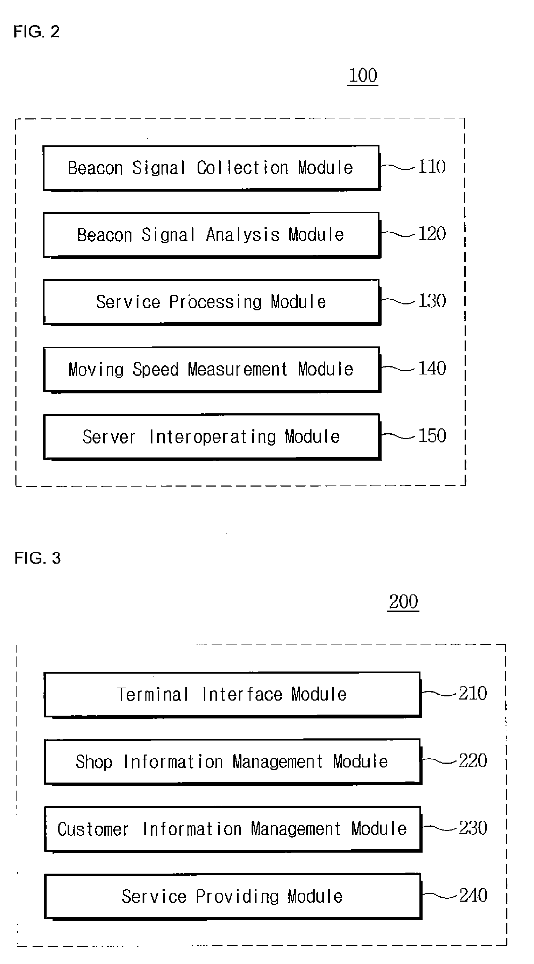

FIG. 2 is a block diagram showing a main configuration of a terminal according to an embodiment of the present invention.

Referring to FIGS. 1 and 2, the terminal 100 according to an embodiment of the present invention may include a beacon signal collection module 110, a beacon signal analysis module 120, a service processing module 130, a moving speed measurement module 140, and a server interoperating module 150.

The term "module" used herein may be an element that performs a predetermined function and may be implemented in hardware, software, or a combination thereof. For example, the module may denote a program module, which includes elements that are executed by a processor to perform predetermined functions, such as software elements, object-oriented software elements, class elements, and task elements, and also processes, functions, attributes, procedures, sub-routines, segments of program codes, drivers, data, database, data structures, tables, arrays, and variables. In addition, the functions provided in the elements and the modules may be combined as a smaller number of elements and modules or further divided into additional elements and modules.

An operation of the terminal 100 according to an embodiment of the present invention will be described below in more detail. First, the beacon signal collection module 110 receives a beacon signal transmitted from at least one beacon device 300 located within a certain radius through short-range wireless communication. Preferably, the terminal 100 may receive and store a beacon signal transmitted according to a Bluetooth low energy (BLE) communication protocol.

The beacon signal analysis module 120 serves to analyze beacon signals collected through the beacon signal collection module 110 for a certain period. In this case, the beacon signal analysis module 120 may analyze a received signal strength indicator (RSSI) of the beacon signal.

The service processing module 130 determines whether the user of the terminal 100 enters or exits the shop where the beacon device 300 is located according to the change in strength of the beacon signals. For example, when the strength of beacon signals gradually increases for 10 seconds after the beacon signal is initially received, the service processing module 130 may determine that the user is entering the shop. On the other hand, when the strength of beacon signals gradually decreases, the service processing module 130 may determine that the user is exiting the shop.

Through this process, when it is determined whether the user enters or exits the shop, the service processing module 130 receives information corresponding to the determination result from the service providing server 200 and processes the received information. For example, when predetermined information is received from the service providing server 200 according to the determination result, the service processing module 130 may perform a designated operation of outputting the information through a designated application such as a mobile wallet application or executing a predetermined application. In this case, when the user is entering the shop, the service processing module 130 may receive various coupons, current event information, shop-associated additional information (e.g., a Wi-Fi password), etc., which may be used in the shop, from the service providing server 200 and may output the received information, etc. On the other hand, when the user is exiting the shop, the terminal 100 may receive a shop stay time, a shop use status, various coupons that may be used on the next visit, event information, etc. from the service providing server 200.

Furthermore, the service processing module 130 may receive the information in the form of a Short Message Service (SMS) message according to the output information of the information transferred from the service providing server 200 or may provide a function of outputting a variety of information and providing alarms thereabout through an interoperable application, such as a mobile wallet application, by running the application.

The moving speed measurement module 140 includes an acceleration sensor and other sensors capable of measuring a moving speed and serves to measure a moving speed of the user. The service processing module 130 may also determine whether the user is entering or exiting the shop in consideration of the moving speed measured through the moving speed measurement module 140. For example, when the strength of beacon signals gradually increases and then gradually decreases, and the moving speed has not changed for a certain time, the service processing module 130 may determine that the user of the terminal 100 enters the shop and takes a seat at a table.

The server interoperating module 150 serves to transfer a result determined by the service processing module 130 to the service providing server 200 and to receive corresponding information from the service providing server 200.

Moreover, the terminal 100 according to an embodiment of the present invention has been described as only including the beacon signal collection module 110, the beacon signal analysis module 120, the service processing module 130, the moving speed measurement module 140, and the server interoperating module 150, but is not limited thereto. The terminal 100 may further include various modules that may perform a function of outputting the information according to a designated scheme.

A detailed operation of the terminal 100 according to an embodiment of the present invention will be more apparently understood with reference to the following flowchart.

A main configuration and an operation method of the service providing server 200 according to an embodiment of the present invention will be described below.

FIG. 3 is a block diagram showing a main configuration of a service providing server 200 according to an embodiment of the present invention.

Referring to FIGS. 1 and 3, the service providing server 200 according to an embodiment of the present invention may include a terminal interface module 210, a shop information management module 220, a customer information management module 230, and a service providing module 240.

The term "module" used herein may be an element that performs a predetermined function and may be implemented in hardware, software, or a combination thereof. For example, the module may denote a program module, which includes elements that are executed by a processor to perform predetermined functions, such as software elements, object-oriented software elements, class elements, and task elements, and also processes, functions, attributes, procedures, sub-routines, segments of program codes, drivers, data, database, data structures, tables, arrays, and variables. In addition, the functions provided in the elements and the modules may be combined as a smaller number of elements and modules or further divided into additional elements and modules.

The terminal interface module 210 serves to support transmission and reception of information to and from the terminal 100. For example, when the shop entrance or exit information for the user is received from the terminal 100, the terminal interface module 210 may support a process of providing corresponding information to the terminal 100.

The shop information management module 220 is a module that prestores and manages a variety of information corresponding to the beacon identification information and associated with the shop, such as a shop name, a shop location, a shop size, the total number of seats in the shop, the number of available seats in the shop, and shop items. In particular, the shop information management module 220 may use the shop entrance or exit information received from the terminal 100 to continuously update the shop information. For example, when the information received from the terminal 100 is shop exit information, the shop information management module 220 may manage the shop information such that the current number of available seats in the shop increases by one.

The customer information management module 230 may serve to store and manage user information corresponding to user identification information. For example, the customer information management module 230 may store and manage information associated with a user, such as the number of visits to the shop, items purchased in the shop, etc., and corresponding to the terminal identification information. When the customer information management module 230 is interoperable with a separate member server, the customer information management module 230 checks member information of the terminal 100 and manages the user information continuously.

The service providing module 240 provides an appropriate service to the terminal 100 according to the information received from the terminal 100. For example, when the information received from the terminal 100 is the shop entrance information, the service providing server 200 may extract service information including various coupons, current event information, shop-associated additional information (e.g., a Wi-Fi password), etc., which may be used in the shop and may transfer the service information to the terminal 100. On the other hand, when the information received from the terminal 100 is the shop exit information, the service providing server 200 may generate information, such as a shop stay time, a shop use status, etc., of the terminal 100, extract various coupons, event information, etc. which may be used on the next visit, and then provide the extracted information, etc. to the terminal 100.

A detailed operation of the service providing server 200 according to an embodiment of the present invention will be more apparently understood with reference to the following flowchart.

The service providing method using the beacon signal according to an embodiment of the present invention will be described below.

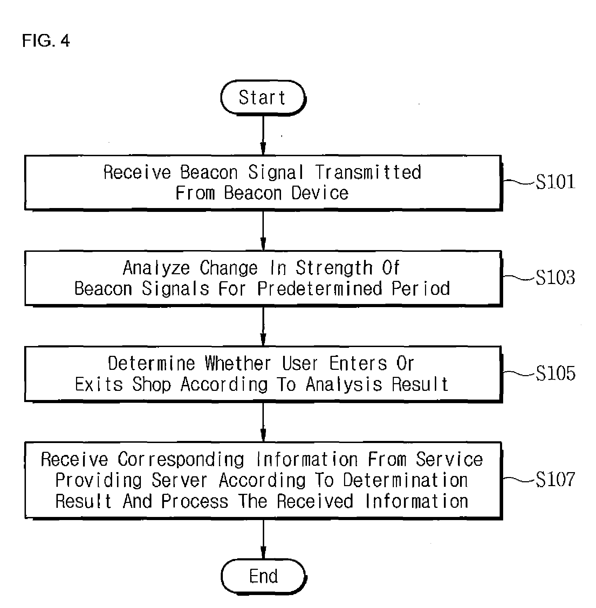

First, the service providing method using the beacon signal will be described with reference to FIG. 4, focusing on the terminal 100.

FIG. 4 is a flowchart illustrating a service providing method using a beacon signal in a terminal according to an embodiment of the present invention.

Referring to FIGS. 1 and 4, when a beacon signal transmitted from at least one beacon device 300 located within a certain radius is received while the terminal 100 moves (S101), the terminal 100 stores beacon signals received for a predetermined period from a time when the beacon signal is initially received, and analyzes the change in strength of the beacon signals (S103). For example, the terminal 100 may analyze the change in strength of the beacon signals received for 10 seconds. The terminal 100 determines whether the user enters or exits the shop according to the analysis result (S105). For example, when the strength of beacon signals gradually increases for 10 seconds after the beacon signal is initially received, the terminal 100 may determine that the user is entering the shop. On the other hand, when the strength of the beacon signals gradually decreases, the terminal 100 may determine that the user is exiting the shop.

Through this process, when it is determined whether the user enters or exits the shop, the terminal 100 receives information corresponding to the determination result from the service providing server 200 and processes the received information (S107). For example, when predetermined information is received from the service providing server 200 according to the determination result, the terminal 100 may perform a designated operation of outputting the information through a designated application such as a mobile wallet application or executing a predetermined application. In this case, when the user is entering the shop, the terminal 100 may receive various coupons, current event information, shop-associated additional information (e.g., a Wi-Fi password), etc., which may be used in the shop, from the service providing server 200 and may output the received information, etc. On the other hand, when the user is exiting the shop, the terminal 100 may receive a shop stay time, a shop use status, various coupons that may be used on the next visit, event information, etc. from the service providing server 200.

Furthermore, the terminal 100 according to an embodiment of the present invention may receive the information in the form of a Short Message Service (SMS) message according to the output information of the information transferred from the service providing server 200 or may provide a function of outputting a variety of information and providing alarms thereabout through an interoperable application, such as a mobile wallet application, by running the application.

The service providing method using the beacon signal according to an embodiment of the present invention will be described below, focusing on the service providing server 200.

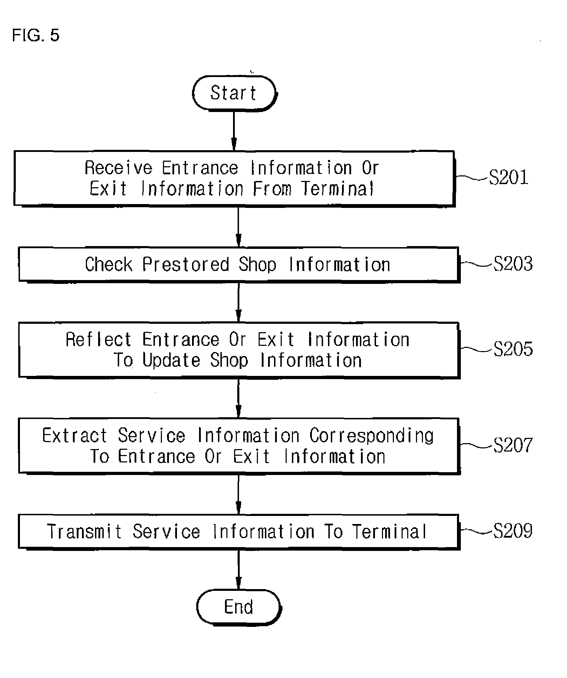

FIG. 5 is a flowchart illustrating a service providing method using a beacon signal in a service providing server according to an embodiment of the present invention.

Referring to FIGS. 1 and 5, the service providing server 200 according to an embodiment of the present invention receives shop entrance or exit information from the terminal 100 (S201). Here, the shop entrance or exit information is information determined according to the change in strength of the beacon signals transmitted from an adjacent beacon device 300. In this case, the shop entrance or exit information may include beacon identification information, terminal identification information, actual data, etc.

Upon receiving the shop entrance or exit information, the service providing server 200 uses the beacon identification information included in the shop entrance or exit information to check the prestored shop information (S203). That is, while the service providing server 200 prestores a variety of information corresponding to the beacon identification information and associated with the shop, such as a shop name, a shop location, a shop size, the total number of seats in the shop, the number of available seats in the shop, and shop items, the service providing server 200 may use the beacon identification information of the information transferred from the terminal 100 to check the prestored shop information.

Subsequently, the service providing server 200 applies the entrance or exit information transferred from the terminal 100 to update the shop information (S205). For example, when the information transferred from the terminal 100 is the entrance information, the service providing server 200 may reflect the entrance information in the prestored number of available seats in the shop.

Subsequently, the service providing server 200 extracts service information corresponding to the entrance or exit information (S207). For example, when the information transferred from the terminal 100 is the shop entrance information, the service providing server 200 may extract service information including various coupons, current event information, shop-associated additional information (e.g., a Wi-Fi password), etc., which may be used in the shop and may transfer the service information to the terminal 100 (S209). On the other hand, when the information received from the terminal 100 is the shop exit information, the service providing server 200 may generate information, such as a shop stay time, a shop use status, etc., of the terminal 100, extract various coupons, event information, etc. which may be used on the next visit, and then provide the extracted information, etc. to the terminal 100.

The service providing method using the beacon signal through interoperation between the terminal 100 and the service providing server 200 according to an embodiment of the present invention will be described below.

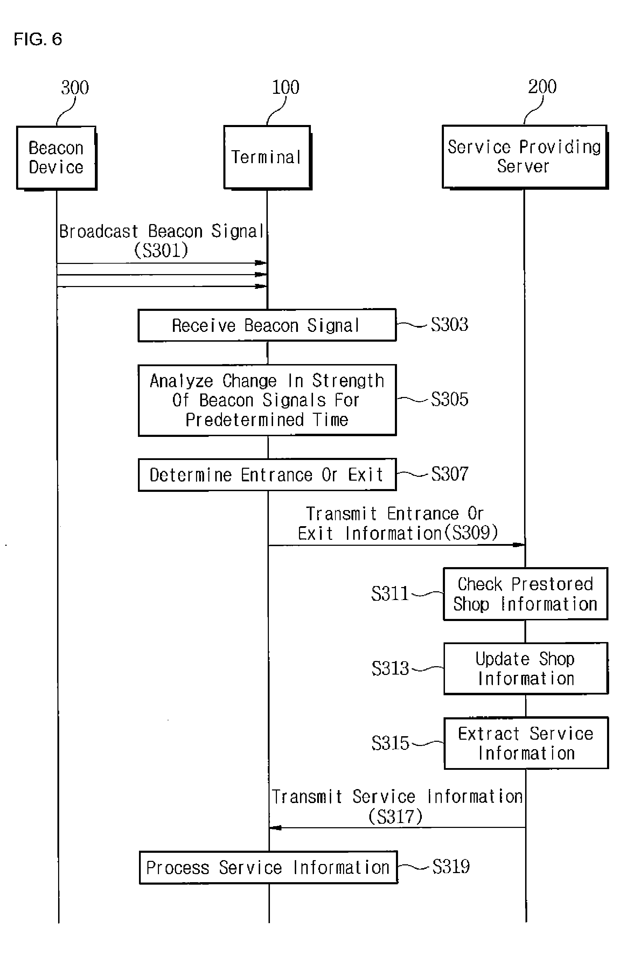

FIG. 6 is a sequence diagram illustrating a service providing method using a beacon signal according to an embodiment of the present invention.

Referring to FIG. 6, first, the beacon device 300 periodically broadcasts a beacon signal over a certain range (S301). When a beacon signal transmitted from at least one beacon device 300 located within a certain radius is received while the terminal 100 moves (S303), the terminal 100 stores beacon signals received for a predetermined period from a time when the beacon signal is initially received, and analyzes the change in strength of the beacon signals (S305). For example, the terminal 100 may analyze the change in strength of the beacon signals received for 10 seconds. The terminal 100 determines whether the user enters or exits the shop according to the analysis result (S307). For example, when the strength of beacon signals gradually increases for 10 seconds after the beacon signal is initially received, the terminal 100 may determine that the user is entering the shop. On the other hand, when the strength of the beacon signals gradually decreases, the terminal 100 may determine that the user is exiting the shop.

Through this process, when it is determined whether the user enters or exits the shop, the terminal 100 transmits the entrance or exit information to the service providing server 200 (S309). In this case, the shop entrance or exit information may include beacon identification information, terminal identification information, and actual data. The service providing server 200 checks the beacon identification information included in the entrance or exit information and checks prestored shop information corresponding to the beacon identification information (S311).

That is, while the service providing server 200 prestores a variety of information corresponding to the beacon identification information and associated with the shop, such as a shop name, a shop location, a shop size, the total number of seats in the shop, the number of available seats in the shop, and shop items, the service providing server 200 may use the beacon identification information of the information transferred from the terminal 100 to check the prestored shop information. Subsequently, the service providing server 200 reflects the entrance or exit information received from the terminal 100 in the current number of available seats in the shop included in the shop information to update the shop information (S313). For example, when the information transferred from the terminal 100 is the entrance information, the service providing server 200 may reflect the entrance information in the prestored number of available seats in the shop.

Subsequently, the service providing server 200 extracts service information corresponding to the entrance or exit information (S315). For example, when the information transferred from the terminal 100 is the shop entrance information, the service providing server 200 may extract service information including various coupons, current event information, shop-associated additional information (e.g., a Wi-Fi password), etc., which may be used in the shop and may transfer the service information to the terminal 100 (S317). On the other hand, when the information received from the terminal 100 is the shop exit information, the service providing server 200 may generate information, such as a shop stay time, a shop use status, etc., of the terminal 100, extract various coupons, event information, etc. which may be used on the next visit, and then provide the extracted information, etc. to the terminal 100, In addition, upon the extraction of the service information, the service providing server 200 may check user information corresponding to identification information of the terminal 100 and extract service information considering the user information.

Upon reception of the extracted service information, the terminal 100 processes information provided from the service providing server 200 (S319). For example, when predetermined service information is received from the service providing server 200 according to the determination result, the terminal 100 may perform a designated operation of outputting the information through a designated application such as a mobile wallet application or executing a predetermined application. In this case, when the user is entering the shop, the terminal 100 may receive various coupons, current event information, shop-associated additional information (e.g., a Wi-Fi password), etc., which may be used in the shop, from the service providing server 200 and may output the received information, etc. On the other hand, when the user is exiting the shop, the terminal 100 may receive a shop stay time, a shop use status, various coupons that may be used on the next visit, event information, etc. from the service providing server 200.

Furthermore, the terminal 100 according to an embodiment of the present invention may receive the information in the form of a Short Message Service (SMS) message according to the output information of the information transferred from the service providing server 200 or may provide a function of outputting a variety of information and providing alarms thereabout through an interoperable application, such as a mobile wallet application, by running the application. In addition, according to the service information, the terminal 100 may process a certain event operation, e.g., an operation corresponding to service information, such as, for example, input of a button, execution of a browser, etc.

Moreover, the terminal 100 according to an embodiment of the present invention has been described as determining whether the user of the terminal 100 is entering or exiting the shop on the basis of the change in strength of the beacon signals, but is not limited thereto. The terminal 100 may continuously transfer the scanned beacon signal to the service providing server 200, and the service providing server 200 may determine whether the user of the terminal 100 enters or exits the shop.

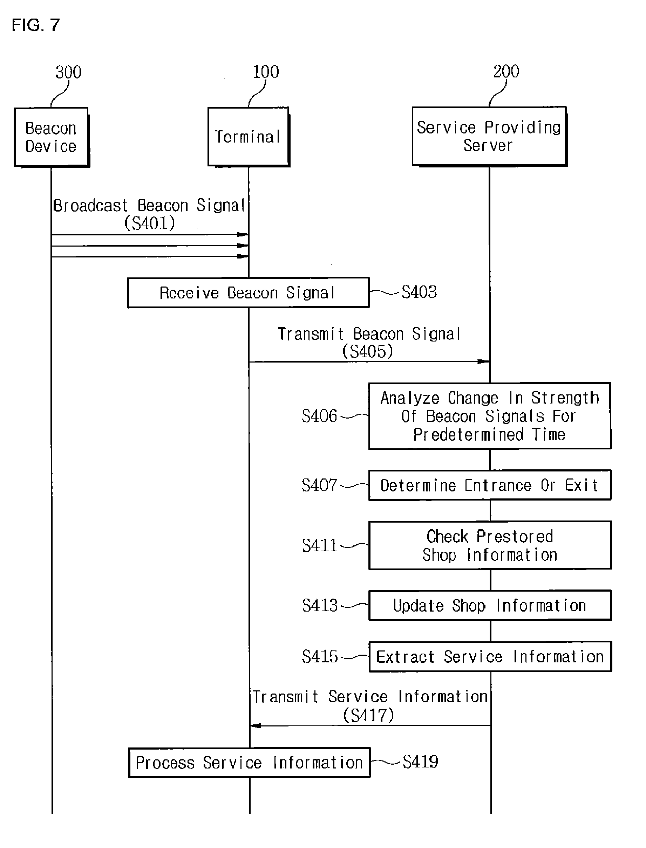

This will be described below with reference to FIG. 7.

FIG. 7 is a sequence diagram illustrating a service providing method using a beacon signal according to another embodiment of the present invention.

Referring to FIG. 7, first, the beacon device 300 periodically broadcasts a beacon signal over a certain range (S401). When a beacon signal transmitted from at least one beacon device 300 located within a certain radius is received while the terminal 100 moves (S403), the terminal 100 transmits beacon signals received for a predetermined period from a time when the beacon signal is initially received (S405). Upon reception of the beacon signal, the service providing server 200 analyzes the change in strength of the beacon signals received for the predetermined period (S406). For example, the service providing server 200 may analyze the change in strength of the beacon signals received for 10 seconds. The service providing server 200 determines whether the user enters or exits the shop according to the analysis result (S407). For example, when the strength of the beacon signals gradually increases for 10 seconds after the beacon signal is initially received, the service providing server 200 may determine that the user is entering the shop. On the other hand, when the strength of the beacon signals gradually decreases, the service providing server 200 may determine that the user is exiting the shop. Moreover, the beacon signal transferred from the terminal 100 includes beacon identification information. The service providing server 200 checks prestored shop information corresponding to the beacon identification information (S411).

That is, while the service providing server 200 prestores a variety of information corresponding to the beacon identification information and associated with the shop, such as a shop name, a shop location, a shop size, the total number of seats in the shop, the number of available seats in the shop, and shop items, the service providing server 200 may use the beacon identification information of the information transferred from the terminal 100 to check the prestored shop information. Subsequently, the service providing server 200 reflects the entrance or exit information received from the terminal 100 in the current number of available seats in the shop included in the shop information to update the shop information (S413). For example, when the information transferred from the terminal 100 is the entrance information, the service providing server 200 may reflect the entrance information in the prestored number of available seats in the shop.

Subsequently, the service providing server 200 extracts service information corresponding to the entrance or exit information (S415). For example, when the information transferred from the terminal 100 is the shop entrance information, the service providing server 200 may extract service information including various coupons, current event information, shop-associated additional information (e.g., a Wi-Fi password), etc., which may be used in the shop and may transfer the service information to the terminal 100 (S417). On the other hand, when the information received from the terminal 100 is the shop exit information, the service providing server 200 may generate information, such as a shop stay time, a shop use status, etc., of the terminal 100, extract various coupons, event information, etc. which may be used on the next visit, and then provide the extracted information, etc. to the terminal 100. In addition, upon the extraction of the service information, the service providing server 200 may check user information corresponding to identification information of the terminal 100 and extract service information considering the user information.

Upon reception of the extracted service information, the terminal 100 processes information provided from the service providing server 200 (S419). For example, when predetermined service information is received from the service providing server 200 according to the determination result, the terminal 100 may perform a designated operation of outputting the information through a designated application such as a mobile wallet application or executing a predetermined application. In this case, when the user is entering the shop, the terminal 100 may receive various coupons, current event information, shop-associated additional information (e.g., a Wi-Fi password), etc., which may be used in the shop, from the service providing server 200 and may output the received information, etc. On the other hand, when the user is exiting the shop, the terminal 100 may receive a shop stay time, a shop use status, various coupons that may be used on the next visit, event information, etc. from the service providing server 200.

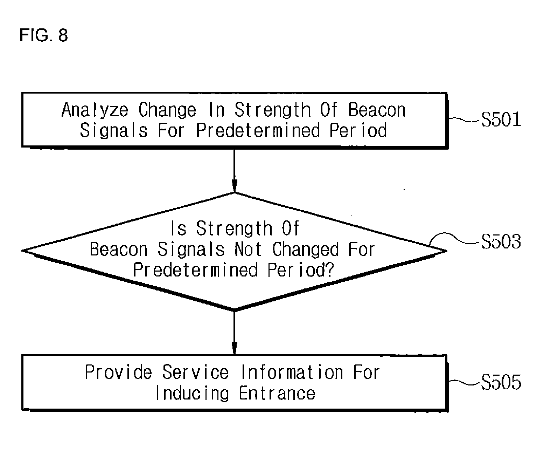

Moreover, in an embodiment of the present invention, it has been described that it is determined only whether the user of the terminal 100 enters or exits the shop. The service may be accurately provided by measuring a moving speed of the terminal 100 and utilizing the measured moving speed. This will be described with reference to FIG. 8. Upon analyzing the change in strength of the beacon signals, the terminal 100 or the service providing server 200 may check whether the moving speed is changed for a certain time at predetermined signal strength (S501 to S503).

For example, it is assumed that when the user of the terminal 100 approaches the proximity of the shop, the strength of the beacon signals gradually increases. However, when the strength of the beacon signals is not changed for a certain period after the strength of the beacon signals gradually increases, the user of the terminal 100 may be determined as hesitating to enter the shop. In this case, the service providing server 200 may provide the terminal 100 with service information for inducing the user to enter the shop, e.g., a discount coupon service (S505). In addition, the service providing server 200 may check the number of available seats to transmit a guidance message of "Seats are currently available" to the terminal 100.

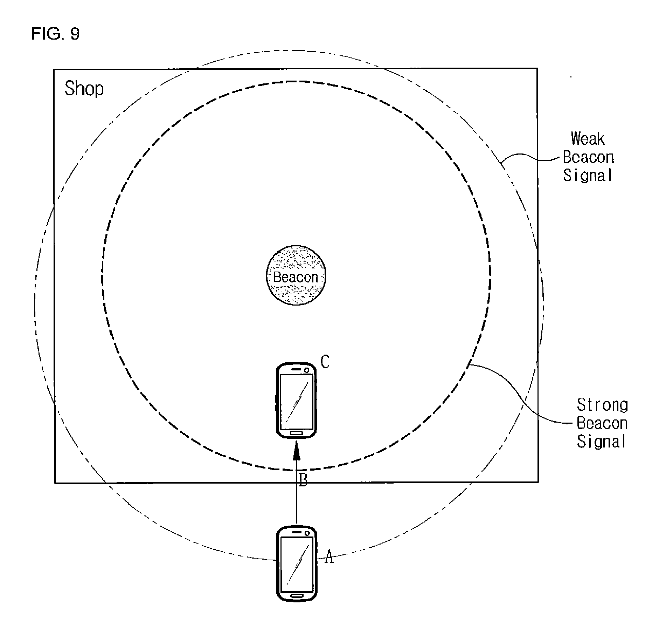

The above-described service providing method using the beacon signal according to an embodiment of the present invention will be described again with reference to FIG. 9.

FIG. 9 is an exemplary diagram illustrating a service providing method using a beacon signal according to an embodiment of the present invention.

As it can be checked in FIG. 9, the following description is focused on a case in which the terminal 100 moves from point A, which is out of the shop, to point C, which is in the shop. A beacon device located in the shop has increased beacon signal strength as the distance from the beacon device becomes smaller and has decreased beacon signal strength as the distance from the beacon device becomes larger. When the terminal 100 is located at point A, which is a further away from the beacon device, the beacon signal strength is lower. The beacon signal strength increases as the terminal 100 approaches the shop. When the moving speed is zero or very low around the shop entrance, e.g., at point B, the terminal 100 may consider the user as hesitating at the shop entrance. In this case, the terminal 100 may be guided to the service providing server 200. The service providing server 200 may provide additional service information, such as the remaining seats, today's menu information, etc., to the terminal 100 and also may provide a variety of information for inducing the user of the terminal 100 to enter the shop.

Thus, when the terminal 100 moves from point B to point C and then takes a seat, it may be checked that the terminal 100 does not move while the beacon signal strength is larger. Thus, the service providing server 200 may recognize that the user of the terminal 100 takes a seat at a table and may also provide corresponding information, for example, menu information to the terminal 100.

The service providing method using the beacon signal according to an embodiment of the present invention has been described above.

The above-described method for providing the service using the beacon signal according to an embodiment of the present invention may be provided in the form of a computer-readable medium suitable to store computer program instructions and data. Programs recorded in the computer-readable medium to implement the service providing method using the beacon signal according to an embodiment of the present invention may execute a method, by the service providing apparatus using the beacon signal, including: receiving a beacon signal from at least one beacon device; analyzing a change in strength of beacon signals received for a predetermined period; determining whether a user of a terminal enters or exits a shop where the beacon device is located, according to the change in strength of the beacon signals, and processing corresponding information according to a result of the determination.

The programs recorded in the computer-readable medium are read, installed, and executed by the computer, such that the above-mentioned functions may be executed.

Here, in order for the computer to read the programs recorded in the recording medium and execute functions implemented with the programs, the above-mentioned programs may include codes which are coded with computer languages such as C, C++, JAVA, machine language, and the like which may be read by a processor (CPU) of the computer.

The code may include a function code associated with a function defining the above-mentioned functions and may also include an execution procedure related control code required for the processor of the computer to execute the above-mentioned functions according to a predetermined procedure In addition, the code may further include a memory reference related code indicating at which location (address number) of the memory inside or outside the computer additional information or media required for the processor of the computer to execute the above-mentioned functions needs to be referenced. Further, in order for the processor of the computer to execute the above-mentioned functions, when the processor needs to communicate with any other computers or servers, etc. at a remote location, the code may further include a communication related code about how the processor of the computer communicates with any other computers or servers at a remote location or which information or media the processor of the computer transmits and receives at the time of the communication, by using the communication module of the computer.

Examples of the computer-readable medium suitable for storing computer program instructions and data include a magnetic medium such as a hard disk, a floppy disk, and a magnetic tape, an optical medium such as a compact disk read only memory (CD-ROM), a digital video disk (DVD), etc., a magneto-optical medium such as a floptical disk, and a semiconductor memory such as a read only memory (ROM), a random access memory (RAM), a flash memory, an erasable programmable ROM (EPROM), and an electrically erasable programmable ROM (EEPROM). A processor and a memory may be supplemented by a specific purpose logic circuit or integrated into a specific purpose logic circuit.

The computer-readable recording medium can also be distributed over network coupled computer systems so that the computer-readable code is stored and executed in a distributed fashion. In addition, a functional program for implementing the present invention, a code and a code segment associated therewith, and the like may be easily inferred or changed by programmers in the art to which the present invention pertains in consideration of a system environment of the computer which reads the recording medium and executes the program.

Each step of the method according to embodiments of the present invention may be implemented with computer-readable instructions and executed by a computing system. Here, a "computing system" is defined as one or more software modules, one or more hardware modules, or combinations thereof, that work together to perform operations on electronic data. For example, the definition of computing system includes the hardware components of a personal computer, as well as software modules, such as the operating system of the personal computer. The physical layout of the modules is not important. A computer system may include one or more computers coupled via a network.

Likewise, a computing system may include a single physical device where internal modules such as a memory and processor work together to perform operations on electronic data.

That is, an apparatus for providing the service using the beacon signal according to an embodiment of the present invention may be implemented to perform the described-above embodiments on the basis of the computing system to be described below.

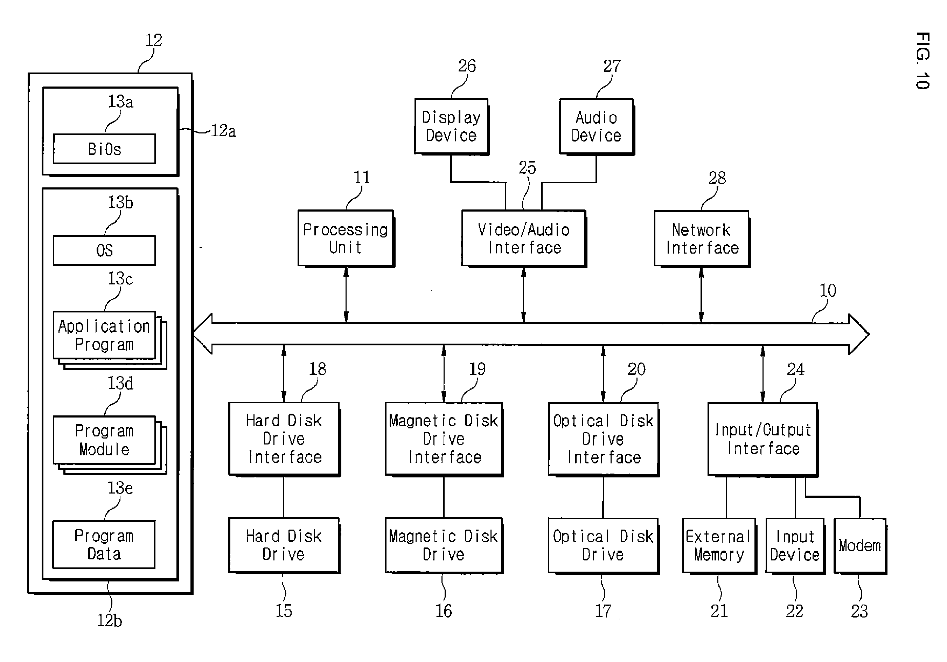

FIG. 10 is a block diagram showing an operating environment of an apparatus for providing a service using a beacon signal according to an embodiment of the present invention.

FIG. 10 and the following discussion are intended to provide a brief, general description of a suitable computing environment in which the present invention may be implemented. Although not required, the invention will be described in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

Referring to FIG. 10, an example computing system for implementing the invention includes a general-purpose computing device in the form of a computer system including a processing unit 11, a system memory 12, and a system bus 10 that couples various system components including the system memory 12 to the processing unit 11.

The processing unit 11 may execute computer-executable instructions designed to implement features of the present invention.

The system bus 10 may be any of several types of bus structures including a memory bus or memory controller, a peripheral bus, and a local bus using any of a variety of bus architectures. The system memory 12 includes a read only memory (ROM) 12a and a random access memory (RAM) 12b. A basic input/output system (BIOS) 13a, containing the basic routines that help transfer information between elements within the computing system, such as during start-up, may be stored in the ROM 12a.

The computing system may include a storage device including, for example, a hard disk drive 15 for reading information from or writing information to a hard disk, a magnetic disk drive 16 for reading information from and writing information to a magnetic disk, and an optical disk drive 17 for reading information from or writing information to an optical disk, such as, for example, a CD-ROM or other optical media. The hard disk drive 15, magnetic disk drive 16, and optical disk drive 17 are connected to the system bus 10 by a hard disk drive interface 18, a magnetic disk drive interface 19, and an optical drive interface 20, respectively.

In addition, the computing system may further include an external memory 21 as the storage device. The external memory 21 may be connected to the system bus 10 through an input/output interface 24.

The drives and their associated computer-readable media provide nonvolatile storage of computer-executable instructions, data structures, program modules, and other data. Although the example environment described herein employs the hard disk drive 15, the magnetic disk drive 16, and the optical disk drive 17, other types of computer-readable media for storing data may be used, including magnetic cassettes, flash memory cards, digital versatile disks, Bernoulli cartridges, RAMs, ROMs, and the like.

Program code means including one or more program modules may be stored in the hard disk drive 15, magnetic disk drive 16, optical disk drive 17, ROM 12a, or RAM 12b including an operating system 13b, one or more application programs 13c, other program modules 13d, and program data 13e, which are loaded and executed by the processing unit 11.

Moreover, a user may enter commands and information into the computing system through a keyboard, a pointing device, or other input devices 22, such as a microphone, joy stick, game pad, scanner, or the like. These input devices 22 can be connected to the processing unit 11 through the input/output interface 24 coupled to the system bus 10. The input/output interface 24 logically represents any of a wide variety of possible interfaces, such as, for example, a serial port interface, a PS/2 interface, a parallel port interface, a Universal Serial Bus (USB) interface, or an Institute of Electrical and Electronics Engineers (IEEE) 1394 interface (i.e., a FireWire interface), or may even logically represent a combination of different interfaces.

In addition, the computing system according to the present invention may further include a display device 26 such as a monitor or liquid crystal display (LCD) and an audio device 27 such as a speaker or microphone. The display device 26 and the audio device 27 are connected to the system bus 10 through a video/audio interface 25. For example, other peripheral output devices (not shown), such as, for example, speakers and printers, can also be connected to the computer system. The video/audio interface 25 may include a High Definition Multimedia Interface (HDMI), a Graphics Device Interface (GDI), etc.

In addition, the computing system is connectable to networks, such as, for example, an office-wide or enterprise-wide computer network, a home network, an intranet, and/or the Internet. The computer system can exchange data with external sources, such as, for example, remote computer systems, remote applications, and/or remote databases over such networks.

The computing system according to an embodiment of the present invention includes a network interface 28, through which the computing system receives data from external sources and/or transmits data to external sources.

In the present invention, the computing system may transmit information to or receive information from a device located in a remote position through the network interface 28. For example, when the computing system denotes the terminal 100, the computing system may transmit information to or receive information from the service providing server 200 through the network interface 28. When the computing system denotes the service providing server 200, the computing system may transmit information to or receive information from the terminal 100 through the network interface 28. The network interface 28 can logically represent one or more software and/or hardware modules, such as, for example, a network interface card and corresponding Network Driver Interface Specification (NDIS) stack.

Likewise, the computer system receives data from external sources and/or transmits data to external sources through the input/output interface 24. The input/output interface 24 may be coupled to a modem 23 (e.g., a standard modem, a cable modem, or a digital subscriber line (DSL) modem), through which the computer system receives data from and/or transmits data to external sources.

While FIG. 10 represents a suitable operating environment for the present invention, the principles of the present invention may be employed in any system that is capable of, with suitable modification if necessary, implementing the principles of the present invention. The environment illustrated in FIG. 10 is illustrative only and by no means represents even a small portion of the wide variety of environments in which the principles of the present invention may be implemented.

Moreover, a messenger program and a variety of information that is generated when the messenger program according to an embodiment of the present invention is executed may be stored and accessed from any of the computer-readable media associated with the computing system as shown in FIG. 10. For example, portions of such program modules and portions of associated program data may be included in the operating system 13b, application programs 13c, program modules 13d, and/or program data 13e, for storage in the system memory 12.

When a mass storage device, such as, for example, a hard disk, is coupled to the computing system, such program modules and associated program data may also be stored in the mass storage device. In a networked environment, program modules associated with the present invention, or portions thereof, can be stored in remote memory storage devices, such as, for example, a system memory and/or mass storage devices associated with a remote computer system connected through the modem 23 of the input/output interface 24 or the network interface 28, for example, computing systems of the terminal 100 and the service providing server 200. As described above, execution of such modules may be performed in a distributed environment.

The specification includes details of a number of specific implementations, but it should be understood that the details do not limit any invention or what is claimable in the specification but rather describe features of the specific embodiments. Features described in the specification in the context of individual embodiments may be implemented as a combination in a single embodiment. In contrast, features described in the specification in the context of a single embodiment may be implemented in multiple embodiments individually or in an appropriate sub-combination. Furthermore, the features may operate in a certain combination and may be initially described as claimed in the combination, but one or more features may be excluded from the claimed combination in some cases, and the claimed combination may be changed into a sub-combination or a modification of a sub-combination.

Similarly, even though operations are described in a certain order in the drawings, it should not be understood that the operations be executed in the certain order or in a sequential order to obtain desired results, or that all the operations be executed. In some cases, multitasking and parallel processing may be beneficial. In addition, it should not be understood that the separation of various system components in the above described embodiments is required in all embodiments, and it should be understood that the above described program components and systems may be incorporated into a single software product or may be packaged in multiple software products.

Thus, particular embodiments have been described. Other embodiments are within the scope of the following claims. For example, the operations recited in the claims can be performed in a different order and still achieve desirable results. As an example, operations depicted in the drawings in a particular order should not be understood as requiring that such operations be performed in the particular order shown or in sequential order. In a certain embodiment, a multitasking and a parallel processing may be beneficial.

This written description sets forth the best mode of the invention and provides examples to describe the invention and to enable a person of ordinary skill in the art to make and use the invention. The specification drafted as such is not limited to detailed terms suggested in the specification. Accordingly, it will be apparent to those skilled in the art that various modifications, changes, and variations may be made in the example without departing from the scope of the invention.

Accordingly, the scope of the present invention should be defined not by the embodiments but by the appended claims.

The present invention is directed to a method and apparatus for providing a service using a beacon signal, and more particularly, to a method and apparatus for providing a service using a beacon signal by analyzing the strength of a beacon signal, determining shop entrance or exit information of a user, managing shop information such as the number of customers in a shop, the number of available seats, or the like, or providing an additional service suitable for a user who is entering or exiting the shop.

According to an embodiment of the present invention, it is possible to analyze the change in strength of beacon signals transmitted from a beacon device using Bluetooth low energy (BLE) technology, determine the entrance or exit of a user according to the analysis, and then more easily provide the user with information suitable for the determined state of the user, for example, various additional services, such as providing shop event related information to a user who is entering the shop or providing a discount coupon that may be used on the next visit to a user who is exiting the shop. Moreover, the present invention has industrial applicability in that the present invention can contribute to the development of industry and also in that the possibility of sales or business is sufficient and also actually the present invention may be carried out.

In this specification, exemplary embodiments of the present invention have been classified into the first, second and third exemplary embodiments and described for conciseness. However, respective steps or functions of an exemplary embodiment may be combined with those of another exemplary embodiment to implement still another exemplary embodiment of the present invention.

## Claims

1. A terminal comprising:
a beacon signal collection module configured to receive a beacon signal from at least one beacon device;
a beacon signal analysis module configured to analyze a change in strength of beacon signals collected through the beacon signal collection module for a predetermined time; and
a service processing module configured to determine whether a user of a terminal enters or exits a shop where the beacon device is located, according to the change in strength of the beacon signals, receive corresponding information from a service providing server according to a result of the determination, and process the received corresponding information.

2. The terminal of claim 1, further comprising a moving speed measurement module configured to measure a moving speed,
wherein the service processing module considers the moving speed measured through the moving speed measurement module when determining whether the user of the terminal enters or exits the shop.

3. The terminal of claim 1, further comprising a server interoperating module configured to transfer a result determined by the service processing module to the service providing server and receive corresponding information from the service providing server.

4. A service providing server comprising:
a terminal interface module configured to receive shop entrance or exit information from any one terminal;
a shop information management module configured to reflect the entrance or exit information in prestored shop information regarding a shop where a user of the terminal is located to update the shop information; and
a customer information management module configured to extract service information corresponding to the entrance or exit information and transmit the extracted service information to the terminal through the terminal interface module.

5. The service providing server of claim 4, wherein the shop information includes one or more of a shop name, a shop location, a shop size, the total number of seats in the shop, the number of available seats in the shop, shop items, and shop event information, which are prestored corresponding to beacon identification information.

6. The service providing server of claim 4, wherein the customer information management module considers user information of the terminal upon extracting the service information corresponding to the entrance or exit information.

7. A method of providing a service using a beacon signal in a service providing apparatus using a beacon signal, the method comprising:
receiving a beacon signal from at least one beacon device;
analyzing a change in strength of beacon signals received for a predetermined period;
determining whether a user of a terminal enters or exits a shop where the beacon device is located, according to the change in strength of the beacon signals; and
processing corresponding information according to a result of the determination.

8. The method of claim 7, wherein the determining comprises considering a moving speed of the terminal upon determining whether the user of the terminal enters or exits the shop.

9. The method of claim 7, wherein the processing of the corresponding information comprises reflecting the entrance or exit information in prestored shop information corresponding to the shop where the user of the terminal is currently located to update the shop information, or providing guide information corresponding the entrance or exit information in consideration of user information of the terminal.

10. A computer-readable recording medium storing a program for executing the method of any one of claims 7 to 9.
